Europäisches Patentamt

European Patent Office

Office européen des brevets

(19)

(11) Veröffentlichungsnummer : **0 365 769 B1**

(12) **EUROPÄISCHE PATENTSCHRIFT**

(45) Veröffentlichungstag der Patentschrift :
**15.07.92 Patentblatt 92/29**

(51) Int. Cl.⁵ : **B60T 8/42, B60T 8/44**

(21) Anmeldenummer : **89114492.5**

(22) Anmeldetag : **05.08.89**

(54) **Hydraulische Zweikreis-Bremsanlage.**

(30) Priorität : **22.10.88 DE 3836079**

(43) Veröffentlichungstag der Anmeldung :
**02.05.90 Patentblatt 90/18**

(45) Bekanntmachung des Hinweises auf die
Patenterteilung :
**15.07.92 Patentblatt 92/29**

(84) Benannte Vertragsstaaten :
**DE FR GB IT**

(56) Entgegenhaltungen :
**EP-A- 0 265 623**
**DE-A- 2 450 874**
**DE-A- 2 926 063**
**DE-A- 3 133 283**
**DE-A- 3 806 227**
**DE-C- 3 603 074**

(56) Entgegenhaltungen :
**GB-A- 2 083 581**
**GB-A- 2 174 161**
**PATENT ABSTRACTS OF JAPAN vol. 11, no. 1**
**(M-550)(2448) 06 Januar 1987**
**PATENT ABSTRACTS OF JAPAN vol. 10, no.**
**281 (M-520)(2337) 25 September 1986**

(73) Patentinhaber : **WABCO Westinghouse**
**Fahrzeugbremsen GmbH**
**Am Lindener Hafen 21 Postfach 91 12 80**
**W-3000 Hannover 91 (DE)**

(72) Erfinder : **Reinecke, Erich**
**Kastanieneck 6**
**W-3167 Burgdorf (DE)**

(74) Vertreter : **Schrödter, Manfred**
**WABCO Westinghouse Fahrzeugbremsen**
**GmbH Am Lindener Hafen 21 Postfach 91 12**
**80**
**W-3000 Hannover 91 (DE)**

## Beschreibung

Die Erfindung bezieht sich auf eine hydraulische Zweikreis-Bremsanlage gemäß dem Oberbegriff des Patentanspruchs 1.

Eine derartige Bremsanlage ist z.B. aus dem FISITA-PAPER 86 51 40, 1986, Seite 2.265 bekannt. Die dort beschriebene Bremsanlage (Bild 5) besitzt einen hydrostatischen Kreis, der von einem Hauptzylinder durch die Fußkraft des Fahrers gespeist wird. Daneben ist ein Servokreis vorgesehen, der von einer hydraulischen Druckquelle, die aus einer Pumpe und einem Hochdruckspeicher besteht, versorgt wird.

Zum Bremsen wird das Druckmittel aus beiden Kreisen über zwei je einem Rad der Vorderachse zugeordnete Servozylinder den Radbremszylindern zugeleitet. Dabei ist der hydrostatische Kreis, d.h. der Hauptzylinder, an ein Ringvolumen des Servozylinders angeschlossen, das sich bei zunehmender Bremskraft vergrößert. Der Servokreis, d.h. die hydraulische Druckquelle, ist an einen Zylinderraum des Servozylinders angeschlossen.

Die beiden Servozylinder übernehmen dabei mehrere Aufgaben. Zum einen trennen sie die beiden Druckkreise, was aus Sicherheitsgründen notwendig ist. Zum anderen passen sie durch geeignete Übersetzungsverhältnisse bzw. Kolbenflächen die unterschiedlichen Druckniveaus der beiden Kreise aneinander an. Des weiteren gestatten sie die Beaufschlagung der durch die Servozylinder angesteuerten Radbremsen zum Teil durch den Servodruck und zu einem anderen Teil gleichzeitig durch den Hauptzylinderdruck.

Zur Realisierung einer Blockierschutz-Funktion sind bei der bekannten Bremsanlage den Servozylindern Regelventile auf der hydrodynamischen Verstärkerseite vorgeschaltet, die von einer Blockierschutz-Elektronik magnetisch betätigbar sind. Hierdurch wird in bekannter Weise das Blockieren der Räder insbesondere bei Notbremsungen verhindert. Das Blockierschutzsystem ist vorzugsweise als Individual-Regelung (IR) ausgebildet, bei dem alle Räder individuell geregelt werden können.

Bekannt ist weiter, die oben beschriebene Bremsanlage noch um zwei zusätzliche Magnetventile (Trennventile) zu ergänzen, mit denen im Fall der geregelten, d.h. blockiergeschützten Bremsung durch ein entsprechendes Signal der Blockierschutz-Elektronik der Hauptzylinder von den Servozylindern abtrennbar ist. Hierdurch werden Rückwirkungen (Pumpbewegungen) des regelnden Blockierschutzsystems auf das Bremspedal verhindert, und andererseits ein vom Hauptzylinder ausgehender störender Einfluß auf die ABS-Regelung ausgeschaltet. Das Ringvolumen der Servozylinder wird dabei außerdem direkt mit dem Druckmittel-Ausgleichsbehälter der Bremsanlage verbunden. Dies ist notwendig, damit der Bremsdruck in den einzelnen Regelzyklen nötigenfalls bis auf Null abgesenkt werden kann.

Diese bekannte Bauweise hat jedoch den Nachteil, daß der hydrostatische Kreis im Regelbetrieb des Servokreises nicht mehr als geschlossenes System angesehen werden kann. Hierdurch besteht die Gefahr, daß der Hauptzylinder bei einem Defekt eines der beiden o.e. zusätzlichen Magnetventile leerlaufen kann.

Der Erfindung liegt deshalb die Aufgabe zugrunde, eine hydraulische Zweikreis-Bremsanlage der eingangs genannten Art anzugeben, bei welcher der hydrostatische Kreis auch während einer Bremsregelung geschlossen bleibt.

Diese Aufgabe wird durch die im Patentanspruch 1 enthaltende Erfindung gelöst. Die Unteransprüche enthalten zweckmäßige Weiterbildungen der Erfindung.

Die Erfindung wird im folgenden anhand einer Zeichnung näher erläutert. Die Zeichnung zeigt in prinzipieller Darstellung den hydraulischen Schaltplan der erfindungsgemäßen Bremsanlage.

**Fig. 1** zeigt eine hydraulische Bremsanlage, von der die Erfindung ausgeht (Stand der Technik).

**Fig. 2** zeigt eine hydraulische Bremsanlage gemäß der Erfindung.

**Fig. 3** zeigt den in der Fig. 2 enthaltenen Volumenaufnehmer in vergrößerter Darstellung.

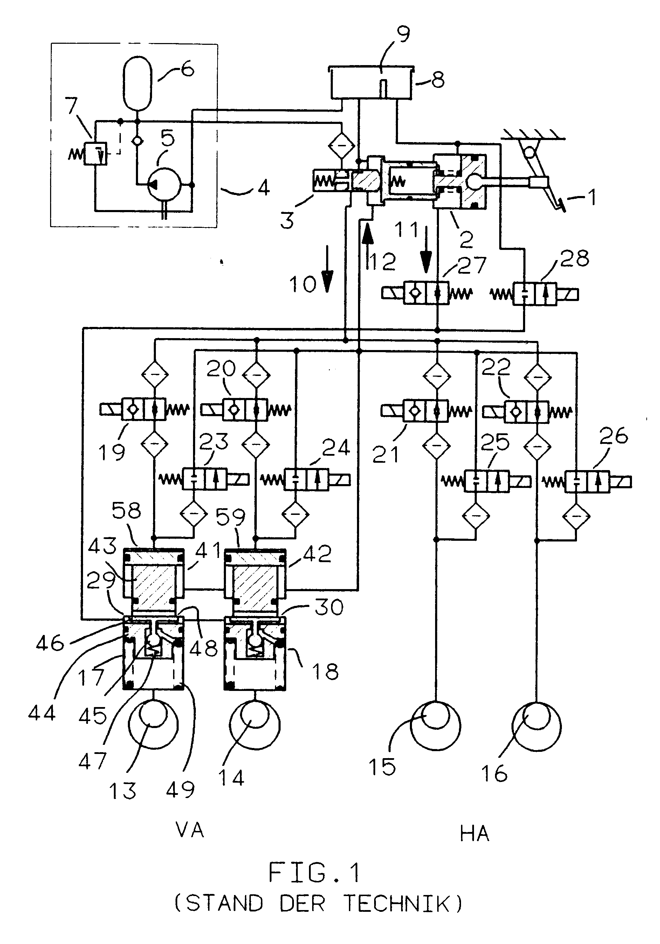

Im folgenden wird zunächst der Aufbau und die Funktion der bekannten Bremsanlage gemäß der Fig. 1 erläutert.

Zum Bremsen betätigt der Fahrer ein Bremspedal (1), das in bekannter Weise mit einem Hauptzylinder (2) in Verbindung steht. Der Hauptzylinder (2) steht mit einem Druckmittel-Ausgleichsbehälter (8) in Verbindung. Bei Betätigung des Hauptzylinders (2) fließt Druckmittel über einen hydrostatischen Kreis (11) in den unteren Teil (Ringvolumen ) (29, 30) zweier der Vorderachse (VA) des Fahrzeugs zugeordneter Servozylinder (17, 18).

Der Kolben des Hauptzylinders (2) betätigt weiter in bekannter Weise ein Verstärkerventil (3), das mit einer hydraulischen Druckquelle (4) in Verbindung steht. Die Druckquelle (4) besteht aus einer Pumpe (5) und einem Speicher (6), einem Überdruckventil (7) und Druckschaltern (nicht dargestellt) zur Einregelung des gewünschten Hydraulikdruckes, der zwischen 100 und 200 bar liegt.

Die Versorgung der Druckquelle (4) sowie des Hauptzylinders (2) erfolgt aus dem Ausgleichsbehälter (8). Zur Trennung des hydrostatischen vom Servokreis besitzt der Ausgleichsbehälter (8) eine Trennwand (9).

Der Ausgang des Verstärkerventils (3) ist an einen Servokreis (10) angeschlossen. Dieser führt über Blok-

kierschutz-Einlaßventile (19, 20) zu Hauptvolumen (58, 59) der bereits erwähnten Servozylinder (17, 18) der Vorderachse (VA). Der Ausgang der Servozylinder (17, 18) ist an Radbremszylinder (13, 14) angeschlossen.

Der Servokreis (10) ist weiter über Blockierschutz-Einlaßventile (21, 22) an Bremszylinder (15, 16) der Hinterachse (HA) angeschlossen. Zum Antiblockiersystem gehören weiter Auslaßventile (23 bis 26), die an eine Rücklaufleitung (12), die zum Ausgleichsbehälter (8) führt, angeschlossen sind. An die Rücklaufleitung (12) sind ebenfalls die atmenden Ringvolumen (41, 42) der Servozylinder (17, 18) angeschlossen.

Die erwähnten Servozylinder enthalten hier zwei starr miteinander verbundene Teilkolben (43, 44). Der untere Teilkolben (44) enthält in einer zentralen Bohrung ein Kugelventil (45), welches mit einer Querstange (46) verbunden ist. Die Querstange (46) wird über das Ventil (45) durch eine Feder (47) an einen Anschlag (48) des Gehäuses gedrückt. Die Teilkolben (43, 44) werden ferner durch eine weitere Feder (49) nach oben in die gezeichnete Ruhelage gedrückt.

Durch die unterschiedlichen Durchmesser der Teilkolben (43 und 44) entsteht bei deren Bewegung ein atmender Raum bzw. ein Ringvolumen (29, 30). Dieser Raum ist über Trennventile (27, 28) mit dem Hauptzylinder (2) bzw. dem Ausgleichsbehälter (8) verbunden.

Alle genannten Ventile sind als Magnetventile ausgebildet und in bekannter Weise an eine Blockierschutzelektronik (nicht dargestellt) angeschlossen. Die Blockierschutzelektronik erhält über (nicht dargestellte) Radsensoren Signale über das Drehverhalten der Räder und steuert die Regelventile (Einlaß- bzw. Auslaßventile 19 bis 26) so an, daß ein Blockieren der Räder verhindert wird.

Im folgenden wird die Funktionsweise der Bremsanlage nach der Fig. 1 (Stand der Technik) erläutert.

Im Normalbetrieb, d.h. bei nicht regelnder Blockierschutzanlage, befinden sich alle Ventile in der gezeichneten Stellung. Aus dem Hauptzylinder (2) gelangt bei Betätigung des Bremspedals (1) Druck über den hydrostatischen Kreis (11) in die Ringvolumen (29, 30) der Servozylinder (17, 18). Gleichzeitig gelangt Druck aus dem Servokreis (10) über das Verstärkerventil (3) auf die Servozylinder (17, 18). Deren Kolben (43, 44) werden nach unten gedrückt. Dabei schließt sich das Kugelventil (45). Der Druck pflanzt sich fort zu den Radbremszylindern (13, 14).

Die Bremswirkung des hydrostatischen Kreises (11) wird also unterstützt durch den Servokreis (10). Dieser wirkt über die geöffneten Blockierschutz-Einlaßventile (19, 20) auf die oberen Teilkolben der Servozylinder (17, 18) für die Vorderachse (VA). Gleichzeitig gelangt der Bremsdruck über die geöffneten Blockierschutz-Einlaßventile (21, 22) zu den Bremszylindern (15, 16) der Hinterachse (HA).

Im Falle eines regelnden Antiblockiersystems werden durch dessen Elektronik zunächst die Trennventile (27, 28) umgesteuert. Hierdurch wird der Hauptzylinder (2) von den Ringvolumen (29, 30) abgetrennt, wodurch ein Pumpen des Bremspedals (1) verhindert wird. Gleichzeitig wird über das nun geöffnete Trennventil (28) eine Verbindung der Ringvolumen (29, 30) zum Ausgleichsbehälter (8) geschaffen. Hierdurch wird ein Atmen der Ringvolumen und ein Drucksenken bis auf Null ermöglicht.

Die Betätigung der Bremszylinder im Regelfalle erfolgt also allein durch den Servokreis (10). Dieser wirkt über die Servozylinder (17, 18) auf die Bremszylinder der Vorderachse und direkt auf die Bremszylinder der Hinterachse.

Falls die Blockierschutzelektronik bei einzelnen Rädern eine Neigung zum Blockieren erkennt, wird in bekannter Weise das zugehörige Einlaßventil geschlossen und das zugehörige Auslaßventil geöffnet, so daß sich der Bremsdruck über die Rücklaufleitung (12) zum Ausgleichsbehälter (8) hin abbauen kann.

Bei der bekannten Bremsanlage ist der hydrostatische Kreis (11) nicht mehr als ein im strengen Sinne geschlossenes System zu betrachten, da bei einem Fehler des Trennventils (27) oder einer fehlerhaften elektrischen Ansteuerung dieses Ventils, und zwar für den Fall, daß das Ventil (27) in der geöffneten Stellung verbleibt, der Inhalt des Hauptzylinders (2) in den Vorratsbehälter (8) abfließen kann. Dies kann auch dann geschehen, wenn im nichtregelnden Fall das zweite Trennventil (28) fehlerhaft in die geöffnete Stellung gesteuert wird.

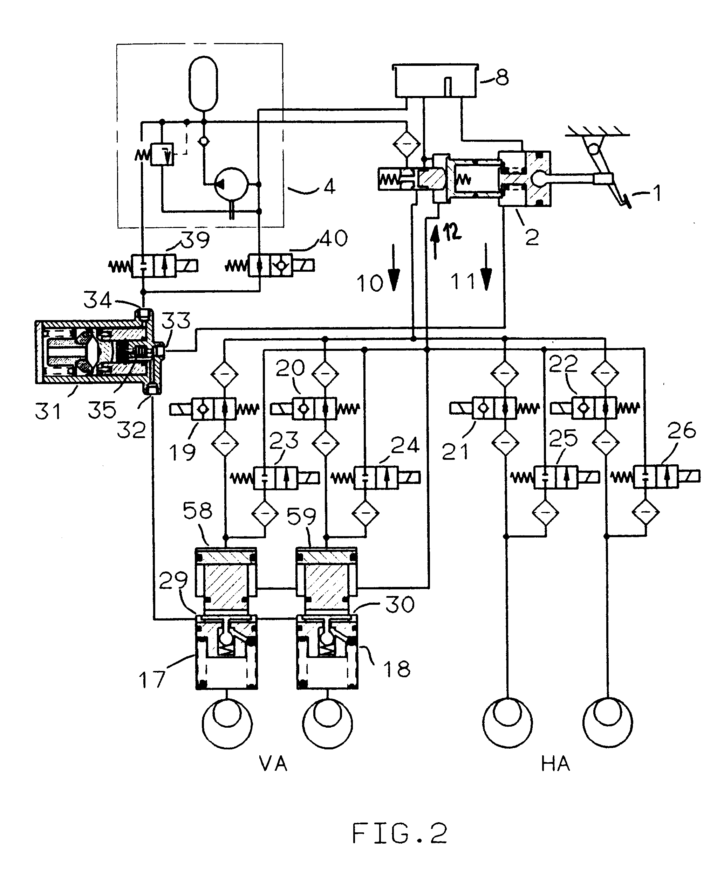

Dies soll durch die in der Fig. 2 dargestellte erfindungsgemäße hydraulische Zweikreis-Bremsanlage verhindert werden.

Wie aus der Fig. 2 erkenntlich ist, sind hier die Trennventile (27, 28) und damit die Verbindung des Hauptzylinders (2) über die genannten Trennventile zum Ausgleichsbehälter (8) entfallen.

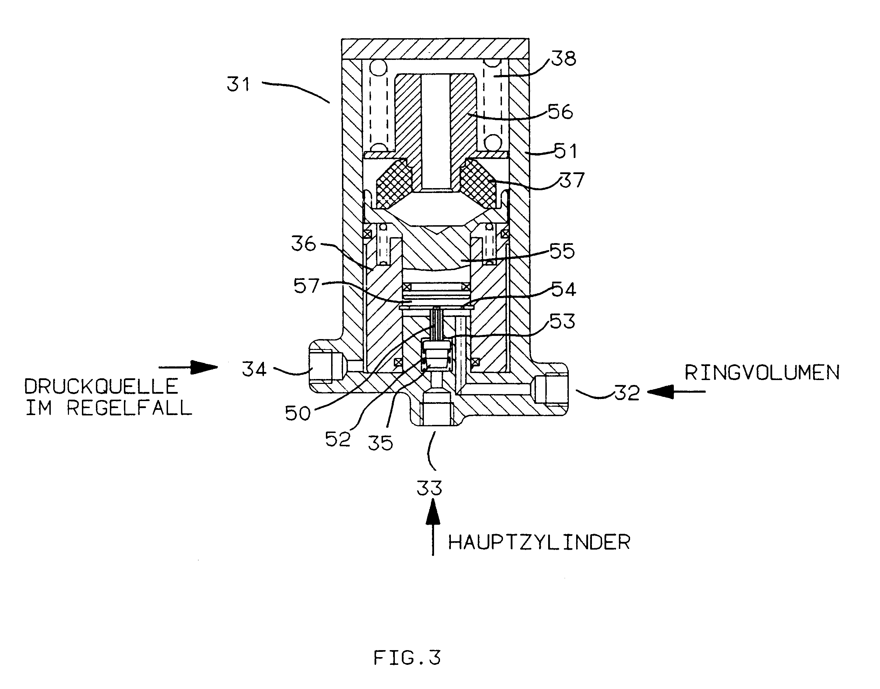

In die Verbindungsleitung zwischen dem Hauptzylinder (2) und den Ringvolumen (29, 30) ist nun ein sogenannter Volumenaufnehmer (31) eingefügt. Der innere Aufbau dieses Volumenaufnehmers ist in der Fig. 3 genauer dargestellt.

Der Volumenaufnehmer (31) besitzt in einem Gehäuse (Zylinder) (51) einen Ringkolben (36). Dieser ist gegen die Kraft zweier hintereinander geschalteter Federn, und zwar einer Gummifeder (37) und einer Stahlfeder (38) verschiebbar. Dabei ist die Stahlfeder (38) bedeutend stärker ausgelegt als die Gummifeder (37).

Der Ringkolben (36) stützt sich ab auf einem Zwischenkolben (55), der sich wiederum auf der Gummifeder (37) abstützt. Die Stahlfeder (38) ist auf einem Trägerkörper (56) gelagert.

Der Volumenaufnehmer (31) hat drei Druckmittelanschlüsse (32, 33, 34). Der erste Anschluß (32) ist an das Ringvolumen (29, 30) der Servozylinder (17, 18) angeschlossen. Der zweite Anschluß (33) ist an den Hauptzylinder (2) angeschlossen. Der dritte Anschluß (34) ist über Magnetventile (39, 40) an die Druckmittelquelle (4) angeschlossen.

Hinter dem zweiten Anschluß (32) ist ein Rückschlagventil (35) eingebaut. Dieses wird mittels einer Druckfeder (52) gegen einen Dichtsitz (53) gedrückt. Das Rückschlagventil (35) wird im Ruhezustand durch eine Stange (50) offengehalten. Die Stange (50) stützt sich dabei ab auf einer gelochten Scheibe (54), welche im Innern des Ringkolbens (36) befestigt ist.

Anstelle des beschriebenen Volumenaufnehmens mit hydraulischem Antrieb kann auch ein Volumenaufnehmer mit elektromagnetischem Antrieb, wie z.B. aus der DE-PS 36 030 74 bekannt, verwendet werden.

Die Funktion des Volumenaufnehmers (31) ist wie folgt (vergleiche Fig. 2).

Bei normalen, ungeregelten Bremsungen besteht eine Verbindung zwischen den Anschlüssen (32) und (33) über das geöffnete Rückschlagventil (35). Hierdurch kann mit dem Hauptzylinder (2) mit Servounterstützung gebremst werden. Dabei wirkt die Gummifeder (37) als Wegsimulator für das Bremspedal (1). Je nach Bremskraft des Fahrers wird die Gummifeder (37) entsprechend zusammengedrückt. Dies erfolgt in einem Druckbereich bis etwa 40 bar. Die Stahlfeder (38) bleibt dabei zunächst in der Ruhelage.

Sobald bei einer Notbremsung oder bei glatter Straßenoberfläche das Blockierschutzsystem zu regeln anfängt, werden das Magnetventil (39) sowie ein weiteres Magnetventil (40), welches den Anschluß (34) des Volumenaufnehmers (31) mit dem Vorratsbehälter (8) verbindet, umgesteuert. Hierdurch gelangt Druck aus der Druckquelle (4) vor den Ringkolben (36) des Volumenaufnehmers (31). Dieser Druck (etwa 130 bar) ist so bemessen, daß die Kraft der Stahlfeder (38) in etwa aufgehoben wird. Dabei werden der Ringkolben (36), der Zwischenkolben (55) und der Trägerkörper (56) für die Stahlfeder (38) bei zusammengedrückter Gummifeder (37) nach links verschoben.

Das Druckmittel aus den Ringvolumen (29, 30) der Servozylinder (17, 18) kann nun in den Volumenaufnehmer (31) hinein abfließen, bzw. atmen. Damit ist die freie Beweglichkeit der Teilkolben (43, 44) der Servozylinder (17, 18) gewährleistet.

Gleichzeitig schließt sich das Rückschlagventil (35), da dieses nicht mehr durch den Kolben (36) und die Scheibe (54) über die Stange (50) offengehalten wird. Hierdurch ist der an den Anschluß (33) angeschlossene Hauptzylinder (2) abgekoppelt. Das Bremspedal (1) wird starr, d.h. es kann vom Fahrer nicht weiter bewegt werden.

Der hydrostatische Kreis ist in diesem Zustand entkoppelt, d.h. er wirkt nicht mehr auf die Servozylinder. Die Entkoppelung erfolgt jedoch ohne den Hydrostatischen Kreis in Richtung Rücklauf zu öffnen. Das "vollgeschlossene System" bleibt erhalten.

## Patentansprüche

1. Hydraulische Zweikreis-Bremsanlage, mit einem hydrostatischen Kreis (11) und einem Servokreis (10), und mit mindestens einem Servozylinder (17, 18) zur gegenseitigen Trennung der genannten Kreise (11, 10), wobei der Servokreis (10) an ein Hauptvolumen (58, 59) und der hydrostatische Kreis (11) an ein Ringvolumen (29, 30) der Servozylinder (17, 18) angeschlossen ist, sowie mit einem elektronisch gesteuerten Antiblockiersystem mit Regelventilen (19 bis 26), dadurch gekennzeichnet, daß das in dem Ringvolumen (29, 30) der Servozylinder (17, 18) enthaltene Druckmittel im regelnden Zustand der Bremsanlage durch einen Volumenaufnehmer (31) mit variablem Volumen (57) aufnehmbar ist.

2. Bremsanlage nach Anspruch 1, dadurch gekennzeichnet, daß der Volumenaufnehmer (31) einen Kolben (36) enthält, der zur Erzeugung des Volumens (57) durch einen mit Fremdenergie betriebenen Antrieb gegen die Kraft mindestens einer Feder (37, 38) zurückbewegbar ist.

3. Bremsanlage nach Anspruch 2, dadurch gekennzeichnet, daß als Antrieb ein Hydraulikkolben (36) oder ein Elektromagnet vorgesehen ist.

4. Bremsanlage nach Anspruch 1 bis 3, gekennzeichnet durch folgende Merkmale:
a) Die Ringvolumen (29, 30) der Servozylinder (17, 18) sind mit einem ersten Anschluß (32) eines Volumenaufnehmers (31) verbunden;
b) ein zweiter Anschluß (33) des Volumenaufnehmers (31) ist verbunden mit einem Hauptzylinder (2);
c) im nicht regelnden Zustand der Bremsanlage besteht eine Verbindung zwischen dem Hauptzylinder (2) und den Ringvolumen (29, 30) über ein geöffnetes Rückschlagventil (35) im Volumenaufnehmer (31);
d) im regelnden Zustand der Bremsanlage wird über einen dritten Anschluß (34) des Volumenaufnehmers (31), welcher an eine Druckquelle (4) angeschlossen ist, ein Kolben (36) gegen die Kraft mindestens einer Feder (37, 38) zurückgeschoben und hierdurch ein Atmungsvolumen für das aus dem Ringvolumen (29, 30) der Servozylinder (17, 18) verdrängte Druckmittel geschaffen;

e) gleichzeitig wird das Rückschlagventil (35) geschlossen und damit der Hauptzylinder (2) abgetrennt.

5. Bremsanlage nach Anspruch 4, <u>dadurch gekennzeichnet,</u> daß die Verbindung der Druckmittelquelle (4) zum Anschluß (34) des Volumenaufnehmers (31) über mindestens ein Trennventil (39, 40) erfolgt, das im Regelfall des Blockierschutzsystems durch dieses elektrisch umsteuerbar ist.

6. Bremsanlage nach Anspruch 1 bis 5, <u>dadurch gekennzeichnet,</u> daß der Volumenaufnehmer (31) eine Hintereinanderschaltung eines Ringkolbens (36), eines Zwischenkolbens (55), einer Gummifeder (37) und einer Stahlfeder (38) enthält, wobei der Zwischenkolben (55) und die Gummifeder (37) als Wegsimulator für ein Bremspedal (1) dienen.

## Claims

1. An hydraulic dual-circuit braking system with an hydrostatic circuit (11) and a servo circuit (10), and with at least one servo cylinder (17, 18) for mutual isolation of the said circuits (11, 10), the servo circuit (10) being connected to a main volume (58, 59) and the hydrostatic circuit (11) being connected to an annular volume (29, 30) of the servo cylinders (17, 18), and with an electronically controlled anti-lock system with control valves (19 to 26), <u>characterized in that</u> the pressure medium contained in the annular volume (29, 30) of the servo cylinders (17, 18) is arranged to be received by a volume receiver (31) of variable volume (57) in the controlling state of the braking system.

2. A braking system according to claim 1, <u>characterized in that</u> the volume receiver (31) contains a piston (36) which is capable of being moved back by a drive means operated by external energy against the force of at least one spring (37, 38) to produce the volume (57).

3. A braking system according to claim 2, <u>characterized in that</u> an hydraulic piston (36) or an electromagnet is provided as the drive means.

4. A braking system according to claim 1 to 3, <u>characterized by the following features:</u>

a) the annular volumes (29, 30) of the servo cylinders (17, 18) are connected to a first connection (32) of a volume receiver (31);

b) a second connection (33) of the volume receiver (31) is connected to a master cylinder (2);

c) in the non-controlling state of the braking system there is a connection between the master cylinder (2) and the annular volume (29, 30) by way of an opened non-return valve (35) in the volume receiver (31);

d) in the controlling state of the braking system a piston (36) is pushed back against the force of at least one spring (37, 38) by way of a third connection of the volume receiver (31), which is connected to a pressure source (4), and by that means a venting volume is produced for the pressure medium displaced from the annular volume (29, 30) of the servo cylinders (17, 18);

e) at the same time, the non-return valve (35) is closed and thus the master cylinder (2) is isolated.

5. A braking system according to claim 4, <u>characterized in that</u> the connection between the pressure medium source (4) and the connection (34) of the volume receiver (31) is effected by way of at least one isolating valve (39, 40) which, when the anti-lock system is in control, can be changed over electrically by that system.

6. A braking system according to claim 1 to 5, <u>characterized in that</u> the volume receiver (31) contains an annular piston (36), an intermediate piston (55), a rubber spring (37) and a steel spring (38) arranged one behind the other, the intermediate piston (55) and the rubber spring (37) serving as a displacement simulator for a brake pedal (1).

## Revendications

1. Installation de freinage hydraulique à double-circuit, comprenant un circuit hydrostatique (11) et un circuit d'assistance (10), et également au moins un cylindre d'assistance (17, 18) pour la séparation mutuelle des deux circuits cités (11, 10), le circuit d'assistance (10) étant raccordé à un volume principal (58, 59) et le circuit hydrostatique (11) à un volume annulaire (29, 30) des cylindres d'assistance (17, 18), l'installation comprenant aussi un système anti-blocage commandé de manière électronique et comportant des vannes de régulation (19 à 26), <u>caractérisée en ce que</u> le fluide de pression renfermé dans le volume annulaire (29, 30) des cylindres d'assistance (17, 18) peut être absorbé, dans l'état de régulation de l'installation de freinage, par un récepteur de volume (31) présentant un volume variable (57).

2. Installation de freinage selon la revendication 1, <u>caractérisée en ce que</u> le récepteur de volume (31) renferme un piston (36), qui pour engendrer le volume (57) peut être repoussé à l'encontre de la force d'au moins un ressort (37, 38), à l'aide d'un dispositif d'entraînement fonctionnant avec une énergie extérieure.

3. Installation de freinage selon la revendication 2, caractérisée en ce qu'en guise de dispositif d'entrainement, il est prévu un piston hydraulique (36) ou un électro-aimant.

4. Installation de freinage selon les revendications 1 à 3, caractérisée par les particularités suivantes:

a) les volumes annulaires (29, 30) des cylindres d'assistance (17, 18) sont reliés à un premier raccord (32) d'un récepteur de volume (31);

b) un second raccord (33) du récepteur de volume (31) est relié à un maître-cylindre (2);

c) dans l'état de non régulation de l'installation de freinage, une liaison est établie entre le maître-cylindre (2) et les volumes annulaires (29, 30) par l'intermédiaire d'un clapet anti-retour (35) ouvert dans le récepteur de volume (31);

d) dans l'état de régulation de l'installation de freinage, un piston (36) est repoussé à l'encontre de la force d'au moins un ressort (37, 38), par l'intermédiaire d'un troisième raccord (34) du récepteur de volume (31), qui est relié à une source de pression (4), ce qui engendre un volume d'admission pour le fluide de pression refoulé hors du volume annulaire (29, 30) des cylindres d'assistance (17, 18);

e) simultanément, le clapet anti-retour (35) est fermé en produisant ainsi l'isolement du maître-cylindre (2).

5. Installation de freinage selon la revendication 4, caractérisée en ce que la liaison de la source de fluide de pression (4) au raccord (34) du récepteur de volume (31) s'effectue par l'intermédiaire d'au moins une vanne d'isolement (39, 40), qui en cas de régulation par le système anti-blocage peut être inversée électriquement par celui-ci.

6. Installation de freinage selon les revendications 1 à 5, caractérisée en ce que le récepteur de volume (31) renferme la succession d'un piston annulaire (36), d'un piston intermédiaire (55), d'un ressort en caoutchouc (37) et d'un ressort en acier (38), le piston intermédiaire (55) et le ressort en caoutchouc (37) servant de simulateur de déplacement pour une pédale de frein (1).

FIG.1
(STAND DER TECHNIK)

FIG.2

FIG.3